(19) Europäisches Patentamt / European Patent Office / Office européen des brevets

(11) **EP 3 309 213 A1**

(12) **EUROPEAN PATENT APPLICATION**
published in accordance with Art. 153(4) EPC

(43) Date of publication:
**18.04.2018 Bulletin 2018/16**

(21) Application number: **15894581.6**

(22) Date of filing: **09.06.2015**

(51) Int Cl.:
*C08L 27/06* (2006.01)  *B29C 44/00* (2006.01)
*C08K 3/26* (2006.01)  *B29C 47/00* (2006.01)

(86) International application number:
**PCT/CN2015/081030**

(87) International publication number:
**WO 2016/197311 (15.12.2016 Gazette 2016/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Jiangsu Kentier Wood Co., Ltd.**
**Danyang, Jiangsu 212300 (CN)**

(72) Inventor: **LI, Haixing**
**Danyang**
**Jiangsu 212300 (CN)**

(74) Representative: **Hirsch & Associés**
**137, rue de l'Université**
**75007 Paris (FR)**

(54) **PVC FOAMING MATERIAL AND MANUFACTURING METHOD THEREFOR, AND PVC COMPOSITE BOARD**

(57) The present application relates to the field of polyvinyl chloride, and particularly, to a PVC foaming material and a manufacturing method therefor as well as a PVC composite board. The PVC foaming material provided in the present application is manufactured by melting and plasticizing materials. The materials comprise the following components in parts by weight: 600 to 900 parts of PVC, 600 to 900 parts of light calcium carbonate, 3 to 10 parts of sodium bicarbonate, 3 to 5 parts of AC foaming agent, and 40 to 80 parts of foaming regulator.

In the present application, by using sodium bicarbonate and the AC foaming agent as foaming agents and adjusting contents of the components in the materials, the PVC foaming material having good shrinkage performance and a low residual indentation is manufactured. Experiments show that the heating shrinkage rate of the PVC foaming material provided in the present application is lower than or equal to 2% (80°C, 6h), and the residual indentation of the PVC foaming material is lower than or equal to 3%.

EP 3 309 213 A1

## Description

### FIELD

The present application relates to the field of polyvinyl chloride, and especially to a PVC foaming material and manufacture method thereof as well as a PVC composite plate.

### BACKGROUND

A plate material is one of materials which are largely utilized in fields such as constructions, home decorations, vehicles. Woody plate materials, for example, solid plates, plywood plates, particle plates and others, were largely used in the past. Due to their light weight, easy workability and extensive sources, they are still being largely utilized up to now.

With the development of national economies, wood supply has become increasingly tight. The main reason for this is there is low forest coverage naturally in China, and after decades of deforestation, large areas of immense forests have become bald. As such, government departments in many provinces and regions have started ban on felling of trees, resulting in great reduction in wood supply and constantly rising prices. Internationally, with reduction of forest resources and enhancement in environmental awareness, various countries have also established policies relevant to restraints on felling and export, which makes sources of woody plate materials decrease and prices thereof increasingly expensive. In addition, woody plate materials tend to produce formaldehyde pollution during decoration of constructions and home furnishings, which is harmful to human's physical health. Therefore, our government department has proposed a requirement regarding "plastics in place of wood" as early as 1980's.

A PVC foaming material, which is also referred to as a Chevron plate or Andy plate, is obtained by foaming of raw materials like PVC and fillers in the presence of a foaming agent, and is a typical plastic material. In recent years, there has been quick developments in the production of PVC foaming materials in China, however, in terms of both the scale and product quality thereof, it is still difficult to meet the requirement for chemical building material markets in China, in which the main problems are the poor shrinkage performance and high residual concavity of the existing PVC foaming materials, which restricts the application thereof in the chemical building material markets.

### SUMMARY OF THE INVENTION

In order to solve the above technical problems, the present invention aims to provide a PVC foaming material and manufacture method thereof as well as a PVC composite plate (board), in which the PVC foaming material provided in the present invention has a good shrinkage performance and low residual concavity.

The present invention provides a PVC foaming material made by melting and plasticizing of a stock, the stock comprising the following in parts by weight:

| | |
|---|---|
| PVC | 600~900 parts; |
| Light calcium carbonate | 600~900 parts; |
| Sodium bicarbonate | 3~10 parts; |
| AC foaming agent | 3~5 parts; |
| Foaming control agent | 40~80 parts. |

Preferably, the light calcium carbonate has a particle size of 1000~1500 mesh.

Preferably, the AC foaming agent has a gas evolution of 150~200 mL/g.

Preferably, the AC foaming agent has a decomposition temperature of 170~180°C.

Preferably, the foaming control agent is one or more of K-400P, K-385, K-418, PA-40, PA-60, LP-21, LP-23, LP-40, LP-90 and LP-530.

Preferably, the PVC has a viscosity number of 73~106 mL/g.

Preferably, the stock further comprises one or more of a stabilizer, lubricant and impact modifier.

The present invention provides a manufacture method of the PVC foaming material, comprising steps of:

subjecting a stock to melting and plasticizing to obtain the PVC foaming material;

in which the stock comprises 600~900 parts by weight of PVC, 600~900 parts by weight of light calcium carbonate, 3~10 parts by weight of sodium bicarbonate, 3~5 parts by weight of an AC foaming agent and 40~80 parts by weight of a foaming control agent.

The present invention provides a PVC composite plate comprising a substrate and a semi-rigid PVC layer provided on a surface of the substrate, wherein
the substrate is formed of the PVC foaming material of any one of claims 1~7 or the PVC foaming material prepared by the method of claim 8;
the semi-rigid PVC layer comprises PVC, filler and a plasticizer.
Preferably, the mass ratio of the PVC, filler and plasticizer in the semi-rigid PVC layer is 5~20:20~60:1~6.
As compared to the prior art, the present invention provides a PVC foaming material and manufacture method thereof as well as a PVC composite plate. The PVC foaming material provided in the present invention is made by melting and plasticizing of a stock, the stock comprising the following in parts by weight: 600~900 parts of PVC, 600~900 parts of light calcium carbonate, 3~10 parts of sodium bicarbonate, 3~5 parts of an AC foaming agent and 40~80 parts of a foaming control agent. In the present invention, by utilizing sodium bicarbonate and the AC foaming agent as the foaming agents, and simultaneously by adjusting the content of each component in the stock, a PVC foaming material having a good shrinkage performance and low residual concavity is prepared. Experimental results indicate that the PVC foaming material provided in the present invention has a heat-shrinkage rate (80°C, 6 h) of ≤ 2% and a residual concavity of ≤ 3%.

## DETAILED DISCRIPTION

In order to providing a further understanding of the present invention, preferred embodiments of the present invention will be described hereinafter in conjunction with examples, however, it should be understood that these descriptions are provided only for further illustrating of the features and advantages of the present invention, rather than limiting the scopes of the present invention.
The present invention provides a PVC foaming material made by melting and plasticizing of a stock, the stock comprising the following in parts by weight:

| | |
|---|---|
| PVC | 600~900 parts; |
| Light calcium carbonate | 600~900 parts; |
| Sodium bicarbonate | 3~10 parts; |
| AC foaming agent | 3~5 parts; |
| Foaming control agent | 40~80 parts. |

The PVC foaming material provided in the present invention is made by melting and plasticizing of a stock comprising PVC, light calcium carbonate, sodium bicarbonate, an AC foaming agent and a foaming control agent, in which the PVC with a full name of polyvinyl chloride is obtained by polymerization of vinyl chloride monomers. In an embodiment provided in the present invention, the PVC has a viscosity number of 73~106 mL/g; and in another embodiment provided in the present invention, the PVC has a viscosity number of 73~86 mL/g. In an embodiment provided in the present invention, the PVC is one or more of SG-6, SG-7 and SG-8. In the present invention, the content of the PVC in the stock is 600~900 parts by weight; in an embodiment provided in the present invention, the content of the PVC in the stock is 700~800 parts by weight; and in another embodiment provided in the present invention, the content of the PVC in the stock is 750~800 parts by weight.
In the present invention, the light calcium carbonate which is also referred to as precipitated calcium carbonate has a settling volume of 2.4~2.8 mL/g. In the present invention, the light calcium carbonate serves as filler and improves the shrinkage performance and residual concavity of the PVC foaming material. In an embodiment provided in the present invention, the light calcium carbonate has a particle size of 1000~1500 mesh; and in another embodiment provided in the present invention, the light calcium carbonate has a particle size of 1200~1250 mesh. In the present invention, the content of the light calcium carbonate in the stock is 600~900 parts by weight; in an embodiment provided in the present invention, the content of the light calcium carbonate in the stock is 700~800 parts by weight; and in another embodiment provided in the present invention, the content of the light calcium carbonate in the stock is 750~800 parts by weight.
In the present invention, the sodium bicarbonate and AC foaming agent are utilized to allow the stock foam during the melting and plasticizing, in which the AC foaming agent is also referred to as an azodicarbonamide foaming agent with azodicarbonamide as the main ingredient. In an embodiment provided in the present invention, the AC foaming agent has a gas evolution of 150~200 mL/g; and in another embodiment provided in the present invention, the AC foaming agent has a gas evolution of 170~200 mL/g. In an embodiment provided in the present invention, the AC foaming agent has a decomposition temperature of 170~180°C. In an embodiment provided in the present invention, the AC foaming agent is NH600. In the present invention, the content of the sodium bicarbonate in the stock is 3~10 parts by weight; in an embodiment provided in the present invention, the content of the sodium bicarbonate in the stock is 5~10 parts by weight; and in another embodiment provided in the present invention, the content of the sodium bicarbonate in the stock is 6~8 parts by weight. In the present invention, the content of the AC foaming agent in the stock is 3~5 parts by weight; in an embodiment provided in the present invention, the content of the AC foaming agent in the stock is 4~5 parts by weight; and in another embodiment provided in the present invention, the content of the AC foaming agent in the stock is 4~4.5 parts by weight.

In the present invention, the foaming control agent is utilized to adjust the degree of foaming of the foaming agent. In an embodiment provided in the present invention, the foaming control agent is one or more of K-400P, K-385, K-418, PA-40, PA-60, LP-21, LP-23, LP-40, LP-90 and LP-530. In an embodiment provided in the present invention, the foaming control agents being K-400P, K-385 and K-418 are provided by Rohm & Hass, USA; PA-40 and PA-60 are provided by Kaneka Corporation, Japan; and LP-21, LP-23, LP-40, LP-90 and LP-530 are provided by Shandong Ruifeng, China. In the present invention, the content of the foaming control agent in the stock is 40~80 parts by weight; in an embodiment provided in the present invention, the content of the foaming control agent in the stock is 50~70 parts by weight; and in another embodiment provided in the present invention, the content of the foaming control agent in the stock is 60~70 parts by weight.

In an embodiment provided in the present invention, the stock further comprises one or more of a stabilizer, lubricant and impact modifier.

In an embodiment provided in the present invention, the stabilizer is one or more of a calcium-zinc composite stabilizer, lead salt composite stabilizer, organic tin-based stabilizer, barium-zinc composite stabilizer and potassium-zinc composite stabilizer. In an embodiment provided in the present invention, the content of calcium stearate is 30~40 wt% and the content of magnesium stearate is 30~40 wt% in the calcium-zinc composite stabilizer; and in another embodiment provided in the present invention, the content of calcium stearate is 35~38 wt% and the content of magnesium stearate is 30~32 wt% in the calcium-zinc composite stabilizer. In an embodiment provided in the present invention, the content of the stabilizer in the stock is 15~50 parts by weight; in another embodiment provided in the present invention, the content of the stabilizer in the stock is 25~40 parts by weight; and in other embodiments provided in the present invention, the content of the stabilizer in the stock is 28~35 parts by weight.

In an embodiment provided in the present invention, the lubricant comprises an internal lubricant and/or an external lubricant. In an embodiment provided in the present invention, the internal lubricant is one or more of G-60, G-16, G-78, GH-4, N-16 and ZY-60. In an embodiment provided in the present invention, the internal lubricants being G-60, G-16, G-78 and GH-4 are provided by Cognis, German; and N-16 and ZY-60 are provided by Zibo Zhengye, China. In an embodiment provided in the present invention, the external lubricant is polyethylene wax, which is also referred to as PE wax. In an embodiment provided in the present invention, the polyethylene wax is H-108 and/or H-110. In an embodiment provided in the present invention, the polyethylene wax being H-108 and H-110 is provided by SQI, Thailand. In an embodiment provided in the present invention, the lubricant comprises the internal lubricant and external lubricant at a mass ratio of 5~10:1~5; in another embodiment provided in the present invention, the lubricant comprises the internal lubricant and external lubricant at a mass ratio of 6~8:2~3; in other embodiments provided in the present invention, the lubricant comprises the internal lubricant and external lubricant at a mass ratio of 7.5-8:2.5-3. In an embodiment provided in the present invention, the content of the lubricant in the stock is 5~15 parts by weight; in another embodiment provided in the present invention, the content of the lubricant in the stock is 8~11 parts by weight; in other embodiments provided in the present invention, the content of the lubricant in the stock is 10~11 parts by weight; and in other embodiments provided in the present invention, the content of the lubricant in the stock is 10~10.5 parts by weight.

In an embodiment provided in the present invention, the impact modifier is one or more of chlorinated polyethylene (CPE), acrylate copolymer (ACR), ethylene-vinyl acetate copolymer (EVA), methyl methacrylate-butadiene-styrene copolymer ternary graft copolymer (MBS) and acrylonitrile-butadiene-styrene copolymer (ABS). In an embodiment provided in the present invention, the chlorinated polyethylene is one or more of CPE-130A, CPE-135A, CPE-135B, CPE-135C and CPE-140A. In an embodiment provided in the present invention, the chlorinated polyethylene being CPE-130A, CPE-135A, CPE-135B, CPE-135C and CPE-140A is provided by Shandong Ruifeng, China. In an embodiment provided in the present invention, the acrylate copolymer is one or more of LS-21, LS-22, LS-50, LS-51, LS-55 and LS-61. In an embodiment provided in the present invention, the acrylate copolymers being one or more of LS-21, LS-22, LS-50, LS-51, LS-55 and LS-61 are provided by Shandong Ruifeng, China. In an embodiment provided in the present invention, the content of the impact modifier in the stock is 30~110 parts by weight; in another embodiment provided in the present invention, the content of the impact modifier in the stock is 50~90 parts by weight; in other embodiments provided in the present invention, the content of the impact modifier in the stock is 70~80 parts by weight; and in other embodiments provided in the present invention, the content of the impact modifier in the stock is 70~75 parts by weight. In an embodiment provided in the present invention, the impact modifier is chlorinated polyethylene and acrylate copolymer at a mass ratio of 10~50:20~60 in the impact modifier; in another embodiment provided in the present invention, the chlorinated polyethylene and acrylate copolymer has a mass ratio of 20~40:30~50 in the impact modifier; and in other embodiments provided in the present invention, the chlorinated polyethylene and acrylate copolymer has a mass ratio of 30~35:40~45 in the impact modifier.

In the present invention, by utilizing the sodium bicarbonate and AC foaming agent as the foaming agents and simultaneously adjusting the content of each component in the stock, a PVC foaming material having a good shrinkage performance and low residual concavity is prepared. Experimental results show that, the PVC foaming material provided in the present invention has a heat-shrinkage rate (80 °C, 6 h) of $\leq$ 2%, a residual concavity of $\leq$ 3%, heat warping (80 °C, 6 h) of $\leq$ 2%, water absorption rate of $\leq$ 1% and density of $0.8\pm0.1$ g/cm$^3$.

The present invention provides a manufacture method of a PVC foaming material, comprising steps of:

subjecting a stock to melting and plasticizing to obtain the PVC foaming material;

in which the stock comprises 600~900 parts by weight of PVC, 600~900 parts by weight of light calcium carbonate, 3~10 parts by weight of sodium bicarbonate, 3~5 parts by weight of an AC foaming agent and 40~80 parts by weight of a foaming control agent.

In the manufacture method of a PVC foaming material provided in the present invention, the stock comprising the PVC, light calcium carbonate, sodium bicarbonate, AC foaming agent and foaming control agent is firstly subjected to melting and plasticizing, in which the content of the PVC in the stock is 600~900 parts by weight, preferably 700~800 parts by weight, more preferably 750~800 parts by weight; the content of the light calcium carbonate in the stock is 600~900 parts by weight, preferably 700~800 parts by weight, more preferably 750~800 parts by weight; the content of the sodium bicarbonate in the stock is 3~10 parts by weight, preferably 5~10 parts by weight, more preferably 6~8 parts by weight; the content of the AC foaming agent in the stock is 3~5 parts by weight, preferably 4~5 parts by weight, more preferably 4~4.5 parts by weight; and the content of the foaming control agent in the stock is 40~80 parts by weight, preferably 50~70 parts by weight, more preferably 60~70 parts by weight.

In an embodiment provided in the present invention, the stock further comprises one or more of a stabilizer, lubricant and impact modifier, in which the content of the stabilizer in the stock is preferably 15~50 parts by weight, more preferably 25~40 parts by weight, most preferably 28~35 parts by weight; the content of the lubricant in the stock is preferably 5~15 parts by weight, more preferably 8~11 parts by weight, most preferably 10~11 parts by weight; and the content of the impact modifier in the stock is preferably 30~110 parts by weight, more preferably 50~90 parts by weight, most preferably 70~80 parts by weight.

In the present invention, the temperature of the melting and plasticizing is 170~180°C; and the duration of the melting and plasticizing is 5~20 min, more preferably 10~15 min. A device for the melting and plasticizing has no particular limitation in the present invention and is preferably an extruder which is well known to those skilled in the art.

In the present invention, preferably, each raw material as described above is firstly mixed uniformly and then the resulting mixed stock is subjected to melting and plasticizing. A device for mixing the stock has no particular limitation in the present invention, and is preferably a high-speed mixer which is well known to those skilled in the art. The duration of the mixing is preferably 15~30 min.

After completion of the melting and plasticizing, the resultant was shaped to obtain the PVC foaming material provided in the present invention.

By the manufacture method of a PVC foaming material provided in the present invention in which the sodium bicarbonate and AC foaming agent are utilized as the foaming agents and simultaneously the content of each component in the stock is adjusted, a PVC foaming material having a good shrinkage performance and residual concavity is prepared.

The present invention provides a PVC composite plate, comprising a substrate and a semi-rigid PVC layer provided on a surface of the substrate, wherein

the substrate is formed of the PVC foaming material as described in the above technical solution or the PVC foaming material prepared by the method as described in the above technical solution;

the semi-rigid PVC layer comprises PVC, filler and a plasticizer.

The PVC composite plate provided in the present invention comprises a substrate and a semi-rigid PVC layer, in which the substrate is formed of the PVC foaming material as described herein or the PVC foaming material prepared by the method as described herein. In an embodiment provided in the present invention, the substrate has a thickness of 3~5 mm.

In the present invention, the semi-rigid PVC layer is provided on the surface of the substrate and comprises PVC, filler and a plasticizer.

In an embodiment provided in the present invention, the PVC has a viscosity number of 73~106 mL/g; and in another embodiment provided in the present invention, the PVC has a viscosity number of 73~86 mL/g. In an embodiment provided in the present invention, the PVC is one or more of SG-6, SG-7 and SG-8.

In an embodiment provided in the present invention, the filler is stone powder. In an embodiment provided in the present invention, the stone powder has a particle size of 100~200 mesh; in another embodiment provided in the present invention, the stone powder has a particle size of 150~200 mesh; and in other embodiments provided in the present invention, the stone powder has a particle size of 160~180 mesh.

In an embodiment provided in the present invention, the plasticizer is dioctyl terephthalate (DOTP). In an embodiment provided in the present invention, the PVC, filler and plasticizer in the semi-rigid PVC layer has a mass ratio of 5~20:20~60:1~6; in another embodiment provided in the present invention, the PVC, filler and plasticizer in the semi-rigid PVC layer has a mass ratio of 10~20:40~60:2~6; and in other embodiments provided in the present invention, the PVC, filler and plasticizer in the semi-rigid PVC layer has a mass ratio of 10~15:40~50:4~6.

In an embodiment provided in the present invention, the semi-rigid PVC layer further comprises a stabilizer. In an embodiment provided in the present invention, the stabilizer is one or more of a calcium-zinc composite stabilizer, lead salt composite stabilizer, organic tin-based stabilizer, barium-zinc composite stabilizer and potassium-zinc composite stabilizer. In an embodiment provided in the present invention, the content of calcium stearate is 30~40 wt% and the content of magnesium stearate is 30~40 wt% in the calcium-zinc composite stabilizer; and in an embodiment provided in the present invention, the content of calcium stearate is 35~38 wt% and the content of magnesium stearate is 30~32 wt% in the calcium-zinc composite stabilizer. In an embodiment provided in the present invention, the PVC and stabilizer in the semi-rigid PVC layer has a mass ratio of 50~200:1~5; in another embodiment provided in the present invention, the PVC and stabilizer in the semi-rigid PVC layer has a mass ratio of 100~200:2~5; and in other embodiments provided in the present invention, the PVC and stabilizer in the semi-rigid PVC layer has a mass ratio of 100~150:2~3.

In an embodiment provided in the present invention, the semi-rigid PVC layer has a thickness of 0.5~3 mm; in another embodiment provided in the present invention, the semi-rigid PVC layer has a thickness of 1~2 mm; and in other embodiments provided in the present invention, the semi-rigid PVC layer has a thickness of 1.5~1.65 mm.

In an embodiment provided in the present invention, the PVC composite plate further comprises an abrasion resistant layer provided on the surface of the semi-rigid PVC layer. In an embodiment provided in the present invention, the abrasion resistant layer has gloss of 5~30 Gs; in another embodiment provided in the present invention, the abrasion resistant layer has gloss of 10~20 Gs; and in other embodiments provided in the present invention, the abrasion resistant layer has gloss of $15\pm5$ Gs. In an embodiment provided in the present invention, the abrasion resistant layer has a light transmittance of 60~100%; and in another embodiment provided in the present invention, the abrasion resistant layer has a light transmittance of $80\pm20\%$. In an embodiment provided in the present invention, the abrasion resistant layer has an elongation at break of $\geq 30\%$; and in another embodiment provided in the present invention, the abrasion resistant layer has an elongation at break of $\geq 50\%$. In an embodiment provided in the present invention, the abrasion resistant layer has a heat-shrinkage rate (100°C, 30 min) of $\leq 5\%$; and in another embodiment provided in the present invention, the abrasion resistant layer has a heat-shrinkage rate (100°C, 30 min) of $\leq 2\%$. In an embodiment provided in the present invention, the abrasion resistant layer has a thickness of 0.2~0.3 mm.

In an embodiment provided in the present invention, the PVC composite plate further comprises a color film layer provided between the semi-rigid PVC layer and the abrasion resistant layer, to render the PVC composite plate having a specific pattern texture and color.

In an embodiment provided in the present invention, the PVC composite plate further comprises a coating layer provided on the surface of the abrasion resistant layer. In the present invention, the coating layer is formed by curing an ultraviolet-curable coating.

In the present invention, the PVC composite plate can be prepared by the method comprising the following:

the above PVC foaming material is bonded with the above semi-rigid PVC layer via glue, follow by being pressed, to obtain the PVC composite plate.

In the present invention, firstly the PVC foaming material is bonded with the semi-rigid PVC layer via glue, wherein the semi-rigid PVC layer can be a commercially available semi-rigid PVC plate material, or can be prepared according to the following method in which:

a raw material which comprises PVC, filler and a plasticizer is in turn subjected to melting and plasticizing, shaping, to obtain the semi-rigid PVC layer.

In a manufacture method of the semi-rigid PVC layer provided in the present invention, the raw material which comprises PVC, filler and a plasticizer is firstly subjected to melting and plasticizing. In the present invention, the raw material preferably further comprises a stabilizer. The temperature of the melting and plasticizing is 180~190°C.

In the present invention, the raw material is preferably mixed before the melting and plasticizing. The mixing is preferably carried out in a high-speed mixer. In an embodiment in which the raw material comprises PVC, filler and a plasticizer provided in the present invention, the raw material is mixed in the high-speed mixer specifically as follows: firstly the PVC and the plasticizer are mixed, preferably at a temperature of 90~100°C for a duration of preferably 5~10 min; and then a mixed material resulted from mixing the PVC and the plasticizer is mixed with the filler, preferably at normal temperature for a duration of preferably 8~10 min. In an embodiment in which the raw material comprises PVC, filler, a plasticizer and a stabilizer provided in the present invention, the raw material is mixed in the high-speed mixer specifically as follows: firstly the PVC, the plasticizer and the stabilizer are mixed, preferably at a temperature of 90~100°C for a duration of preferably 5~10 min; and then a mixed material resulted from mixing the PVC, the plasticizer and the stabilizer is mixed with the filler, preferably at normal temperature and for a duration of preferably 8~10 min.

After completion of the melting and plasticizing, the plasticized raw material is shaped to obtain the semi-rigid PVC layer. In the present invention, the melting and plasticizing as well as the shaping are specifically as follows:

the raw material is firstly subjected to internal mixing and plasticizing in an internal mixer, and then subjected to open milling and plasticizing in an open mill, and finally subjected to plasticization in a calender and calendered to a designed thickness, followed by cooling and shaping. During the process, the temperature of the internal mixing and plasticizing is preferably 180~190°C and the duration of the internal mixing and plasticizing is preferably 8~10 min. The temperature of the open milling and plasticizing is preferably 180~190°C, and there is no particular limitation on the duration of the open milling and plasticizing in the present invention, and just after the raw material is subjected to the open milling and plasticizing until there is no obvious powder, and then following procedure can be carried out. The calender has a roller spacing of preferably 2~3 min, a roller speed of preferably 10~20 m/min and a calender roll temperature of preferably 180~190°C.

In the present invention, before the bonding between the PVC foaming material and the semi-rigid PVC layer, an abrasion resistant layer is preferably provided on the semi-rigid PVC layer by the following process:

a material for the abrasion resistant layer is covered onto the surface of the semi-rigid PVC layer prepared as described above, and then pressed to obtain a semi-rigid PVC layer provided with the abrasion resistant layer.

In the present invention, the material for the abrasion resistant layer has gloss of 5~30 Gs, more preferably 10~20 Gs, most preferably 15±5 Gs; the material for the abrasion resistant layer has a light transmittance of 60~100%, more preferably 80±20%; the material for the abrasion resistant layer has an elongation at break of ≥ 30%, more preferably ≥ 50%; the material for the abrasion resistant layer has a heat-shrinkage rate (100°C, 30 min) of ≤ 5%, more preferably ≤ 2%. A way for the pressing is preferably hot pressing and then cold pressing. The temperature of the hot pressing is preferably 120~140°C; the duration of the hot pressing is preferably 20~30 min and the pressure of the hot pressing is preferably 5~10 mPa. The pressure of the cold pressing is preferably 15~20 mPa and the duration of the cold pressing is preferably 20~25 min.

In the present invention, a color film layer is preferably provided between the semi-rigid PVC layer and the abrasion resistant layer by a process in which a color film layer is covered onto the surface of the semi-rigid PVC layer prepared as described above, and then the material for the abrasion resistant layer is covered onto the surface of the color film layer, followed by pressing.

In the present invention, it is preferred that after the abrasion resistant layer is provided on the surface of the semi-rigid PVC layer, a coating layer is provided on the abrasion resistant layer by a process in which an ultraviolet-curable coating is coated onto the surface of the abrasion resistant layer, and after the coating is cured, the coating forms a coating layer on the surface of the abrasion resistant layer.

After bonding between the PVC foaming material and the semi-rigid PVC layer, they are subjected to pressing. The pressure of the pressing is preferably 5~10 mPa and the duration of the pressing is preferably 12~24 h. At the end of the pressing, the PVC composite plate provided in the present invention is obtained.

With respect to the PVC composite plate provided in the present invention, a PVC foaming material having a good shrinkage performance and low residual concavity is used as a substrate material and a semi-rigid PVC material is used as a surface layer. As compared to a single semi-rigid PVC plate material, the composite plate provided in the present invention has large slotting and clasp strength as well as low density, which has a good application prospect.

For clarity, a detailed description is illustrated by the following examples hereinafter.

EXAMPLE 1

Semi-rigid PVC plate having a coating layer and abrasion resistant layer

100 kg of PVC SG-8, 40 kg of DOTP and 2 kg of a calcium-zinc composite stabilizer (with 38 wt% of calcium stearate, 32 wt% of zinc stearate and the balance being a conventional aid for the calcium-zinc composite stabilizer) were mixed in a high-speed mixer at 90~100°C for 5 min. The obtained mixture was mixed with 400 kg of stone powder (160 mesh, whiteness of 80) in a cold mixer for 8~10 min, obtaining a mixed material.

The above mixed material was fed into an internal mixer for internal mixing and plasticizing for 8~10 min, and then the internally mixed stock was fed into an open mill for continuous plasticization, in which the temperature for the open milling was controlled within 180~190°C. The stock to be wrapped on the open mill was plasticized uniformly until there was no obvious powder, and was sent to a calender. The calender was set to 2 mm for the roller spacing, 20 m/min for the roller speed and the temperature of the calender roller was controlled within 180~190°C. The stock was further plasticized in the calender and calendered to a thickness of 1.65 mm. The calendered stock was subjected to cold shaping and cutting, to obtain a base sheet of 1280 mm×990 mm×1.65 mm.

The base sheet prepared as described above, a color film with a thickness of 0.05 mm and an abrasion resistant layer with a thickness of 0.3 mm were stacked, in which the abrasion resistant layer had a gloss of 15±5 Gs, light transmittance of 80±20%, elongation at break of $\geq$ 50% and heat-shrinkage rate (100°C, 30 min) of $\leq$ 2.0%. After the base sheet, color film and abrasion resistant layer were stacked, hot pressing was carried out in which the temperature was 120~140°C, the duration was 20 min and the pressure was 5 mPa. At the end of the hot pressing, cold pressing was carried out in which the pressure was 5 mPa and the duration was 20~25 min.

An ultraviolet-curable coating (Hunan Hengxing, China, HX5A01) was spray coated onto the plate material obtained by cold pressing, and after the coating was cured, a semi-rigid PVC plate was obtained.

The semi-rigid PVC plate prepared in this example had a size of 1228×950×2 mm and a density of 1.7 g/cm$^3$. The semi-rigid PVC plate was subjected to a performance test, and its performances met requirements to semi-rigid polyvinyl chloride block floor tiles in accordance with Standard GB/T 4085-2005.

EXAMPLE 2

PVC foaming plate

750 g of PVC SG-8, 750 g of light calcium carbonate (1250 mesh, a settling volume of 2.4~2.8 mL/g), 28 g of a calcium-zinc composite stabilizer (with 38 wt% of calcium stearate, 32 wt% of zinc stearate and the balance being a conventional aid for the calcium-zinc composite stabilizer), 7.5 g of an internal lubricant (Cognis, German; G-60), 60 g of a foaming control agent (Shandong Ruifeng, China; LP-90), 40 g of ACR (Shandong Ruifeng, China; LS-21), 2.5 g of PE wax (SQI, Thailand; h-110), 4.5 g of an AC foaming agent (Joysun Chemicals, China; NH600), 30 g of chlorinated polyethylene (Shandong Ruifeng, China; CPE-135A) and 6 g of sodium bicarbonate were mixed in a high-speed mixer for 15 min, obtaining a mixture.

The above mixture was melted and plasticized in an extruder at 170°C for 10 min, and was extruded through a die head into a vacuum setting device. The extruded product was cut after setting in the vacuum setting device, obtaining a low-foamed PVC plate.

The low-foamed PVC plate prepared in this example had a size of 1230 mm×50 mm×3 mm. Tests for heat-shrinkage performance, residual concavity, water absorption rate and density were carried out on this PVC foaming material, in which the heat-shrinkage rate was carried out in accordance with GB/T 4085-2005, the heat warping was carried out in accordance with GB/T 4085-2005, the residual concavity was carried out in accordance with the provision under 6.7 of GB/T 4085-2005, and the water absorption rate was carried out in accordance with GBT 17657-1999. Test results were as follows: the heat-shrinkage rate (80°C, 6 h) $\leq$ 1.5%, heat warping (80°C, 6 h) $\leq$ 2 mm, residual concavity $\leq$ 2%, water absorption rate $\leq$ 1% and density of 0.8±0.1 g/cm$^3$. As can be seen from the above test data, the PVC foaming material prepared in this example have a low heat-shrinkage rate and heat warping, indicating that this PVC foaming material had good shrinkage performance; and the PVC foaming material prepared in this example also had a residual concavity of $\leq$ 2%, which was low.

A test was performed on the PCV foaming plate material prepared in this example for its cold and heat resistance.

(1) Test principle

A specimen was tested to determine its ability to resist repeated temperature changes.

(2) Instruments

Air-convention drying oven, with a constant-temperature sensitivity of ±1°C and a temperature range of 40°C~200°C;

Cryogenic box, with a constant-temperature sensitivity of ±1°C and temperature can reach as low as -40°C;

Vernier caliper, with accuracy of 0.02 mm.

(2) Test procedures

a) The surface of 3 pieces of the low-foamed PVC plates provided in this example was wiped up with absorbent gauze which has been dipped with ethanol, and dried in the air. A central line parallel to the length direction was drawn on each of the low-foamed PVC plates, and a length of the central line Li was measured, which was accurate to 0.02 mm.
b) High- and low-temperature cycle tests were carried out on the 3 pieces of low-foamed PVC plate, respectively, during which the temperature and time in each high- and low-temperature cycle were set as follows:

Temperature: $(23\pm2)\,°C \rightarrow (-40\pm2)\,°C \rightarrow (23\pm2)\,°C \rightarrow (80\pm2)\,°C$
Time:            1 h          6h          1 h          16 h

Afterwards, they were left above 6 h at the temperature of $(23\pm2)°C$, and visually observed for their appearance under natural light and measured for a length of the central line $L_2$, which was accurate to 0.02 mm.

(4) Results

The low-foamed PVC plate was analyzed to determine whether there was any situation such as cracking, bubbling, etc. and recorded.
The size change rate of the low-foamed PVC plate was calculated, which was accurate to 0.01%.

$$L=(L_2 - L_1)/100* L_1$$

in the formula:

L-size change rate of a specimen;

$L_2$-Size of the specimen after tests, in millimeter (mm);

$L_1$-size of the specimen before tests, in millimeter (mm).

The size change rate of the 3 pieces of low-foamed PVC plate was respectively calculated to give an average value, which was the size change rate of the low-foamed PVC plate provided in this example which was accurate to 0.02 mm.
Test results of the PVC foaming plate material provided in this example for its cold and heat resistance are shown in TABLE 1.

TABLE 1 Test result of cold and heat resistance of the PVC foaming plate prepared in EXAMPLE 2

| Surface appearance | No cracking, no bubbling, no degumming |
|---|---|
| Size change % | $\leq 0.28\%$ |

As can be seen from TABLE 1, the PVC foaming material provided in this example had excellent cold and heat resistance.

EXAMPLE 3

PVC foaming plate

800 g of PVC SG-8, 750 g of light calcium carbonate (1000 mesh, a settling volume of 2.4~2.8 mL/g), 35 g of a calcium-zinc composite stabilizer (with 38 wt% of calcium stearate, 32 wt% of zinc stearate and the balance being a conventional aid for the calcium-zinc composite stabilizer), 8 g of an internal lubricant (Cognis, German; G-60), 60 g of a foaming control agent (Shandong Ruifeng, China; LP-90), 40 g of ACR (Shandong Ruifeng, China; LS-21), 2.5 g of PE wax (SQI, Thailand; H-110), 4 g of an AC foaming agent (Joysun Chemicals, China; NH600), 35 g of chlorinated polyethylene (Shandong Ruifeng, China; CPE-135A) and 8 g of sodium bicarbonate were mixed in a high-speed mixer for 15 min, obtaining a mixture.
The above mixture was melted and plasticized in an extruder at 170°C for 10 min, and was extruded through a die head into a vacuum setting device. The extruded product was cut after setting in the vacuum setting device, obtaining a low-foamed PVC plate.
The low-foamed PVC plate prepared in this example had a size of 1230 mm×50 mm×3 mm. Tests for heat-shrinkage performance, residual concavity, water absorption rate and density were carried out on this PVC foaming material, in which the heat-shrinkage rate was carried out in accordance with GB/T 4085-2005, the heat warping was carried out in accordance with GB/T 4085-2005, the residual concavity was carried out in accordance with the provision under 6.7 of GB/T 4085-2005, and the water absorption rate was carried out in accordance with GBT 17657-1999. Test results were as follows: the heat-shrinkage rate (80°C, 6 h) ≤ 1.8%, heat warping (80°C, 6 h) ≤ 2 mm, residual concavity ≤ 2.5%, water absorption rate ≤ 1% and density of 0.8±0.1 g/cm³.

As can be seen from the above test data, the PVC foaming material prepared in this example has a low heat-shrinkage rate and heat warping, indicating that this PVC foaming material had good shrinkage performance; moreover, the PVC foaming material prepared in this example also had a residual concavity of ≤ 2.5%, which was low.

A test for cold and heat resistance was performed on the PCV foaming plate prepared in this example by reference to the method of EXAMPLE 2. Test results are shown in TABLE 2.

TABLE 2 Test results of the cold and heat resistance of PVC foaming plate prepared in EXAMPLE 3

| Surface appearance | No cracking, no bubbling, no degumming |
|---|---|
| Size change % | ≤ 0.3% |

As can be seen from TABLE 2, the PVC foaming material provided in this example had excellent cold and heat resistance.

EXAMPLE 4

PVC foaming plate

750 g of PVC SG-8, 800 g of light calcium carbonate (1500 mesh, a settling volume of 2.4~2.8 mL/g), 28 g of a calcium-zinc composite stabilizer (with 38 wt% of calcium stearate, 32 wt% of zinc stearate and the balance being a conventional aid for the calcium-zinc composite stabilizer), 7.5 g of an internal lubricant (Cognis, German; G-60), 70 g of a foaming control agent (Shandong Ruifeng, China; LP-90), 45 g of ACR (Shandong Ruifeng, China; LS-21), 3 g of PE wax (SQI, Thailand; h-110), 4.5 g of an AC foaming agent (Joysun Chemicals, China; NH600), 30 g of chlorinated polyethylene (Shandong Ruifeng, China; CPE-135A) and 6 g of sodium bicarbonate were mixed in a high-speed mixer for 15 min, obtaining a mixture.

The above mixture was melted and plasticized in an extruder at 170°C for 10 min, and was extruded through a die head into a vacuum setting device. The extruded product was cut after setting in the vacuum setting device, obtaining a low-foamed PVC plate.

The low-foamed PVC plate prepared in this example had a size of 1230 mm×50 mm×3 mm. Tests for heat-shrinkage performance, residual concavity, water absorption rate and density were carried out on this PVC foaming material, in which the heat-shrinkage rate was carried out in accordance with GB/T 4085-2005, the heat warping was carried out in accordance with GB/T 4085-2005, the residual concavity was carried out in accordance with the provision under 6.7 of GB/T 4085-2005, and the water absorption rate was carried out in accordance with GBT 17657-1999. Test results were as follows: the heat-shrinkage rate (80°C, 6 h) ≤ 1.7%, heat warping (80°C, 6 h) ≤ 2 mm, residual concavity ≤ 2.8%, water absorption rate ≤ 1% and density of 0.8±0.1 g/cm³.

As can be seen from the above test data, the PVC foaming material prepared in this example have a low heat-shrinkage rate and heat warping, indicating that this PVC foaming material had good shrinkage performance; moreover, the PVC foaming material prepared in this example also had a residual concavity of ≤ 2.8%, which was low.

A test was performed on the PCV foaming plate prepared in this example for its cold and heat resistance by reference to the method of EXAMPLE 2. Test results are shown in TABLE 3.

TABLE 3 Test results of cold and heat resistance of PVC foaming plate prepared in EXAMPLE 4

| Surface appearance | No cracking, no bubbling, no degumming |
|---|---|
| Size change % | ≤ 0.29% |

As can be seen from TABLE 3, the PVC foaming material provided in this example had excellent cold and heat resistance.

EXAMPLE 5

PVC composite plate

Thermosetting glue (Shenzhen Degoo, China; CY1003:CY6008=1:1 (g/g) mixed glue) was coated in an amount of 75 g/m$^2$ uniformly on a surface of the low-foamed PVC material prepared in EXAMPLE 2 by use of a laminator, and the semi-rigid PVC plate obtained in EXAMPLE 1 was laminated with the low-foamed PVC material coated with glue together by pressing, obtaining a semi-rigid PVC/low-foamed PVC plate.

The laminated semi-rigid PVC/low-foamed PVC plate was subjected to cold pressing under a pressure of 5.0 mPa for a duration of 12 h. At the end of the cold pressing, the plate was subjected to die cutting and slotting to obtain a PVC composite plate.

Performance tests were carried out on the PVC composite plate obtained in this example and results were shown in TABLE 4.

TABLE 4. Results of performance tests on the PVC composite plate obtained in EXAMPLE 5

| Property | Test requirement | | Standard requirement (gb4085-2005) | | Test result | Unit |
|---|---|---|---|---|---|---|
| | | | Standard value mm | Tolerance mm | | |
| Size | Heat warping MD, inches(mm) | | 0 | 2.00 | 1.0 | inches |
| | Heat warping AMD, inches(mm) | | 0(0.00) | 2.00 | 0.5 | inches |
| | Heated length changing rate MD, inches (mm) | | 0(0.00) | ≤1.5% | 1.0% | mm |
| | Heated length changing rate AMD, inches (mm) | | 0(0.00) | 1.5% | 1.0% | mm |
| | Water absorbed size changing rate inches (mm) | | 0(0.00) | ≤0.1 % | 0 | mm |
| Appearance | Surface | | No chipping, cracking, layering, bubbling, scratch; gloss being consistent | | Qualified | / |
| Performance | Density | | ≥0.80 | | 0.82 | g/cm$^3$ |
| | Stain resistance | Sprayed with cooking oil, vinegar, wine, tomato sauce, etc., 2 hrs, and after removed, no contamination and stained trace | No contamination and stained trace | | Qualified | / |
| | | Iodine | 3 | | Qualified | / |
| | | Mustard | 0 | | Qualified | / |
| | | Shoe polish | 2 | | Qualified | / |
| | | Marking pen | 0 | | Qualified | / |
| | Residual concavity | | 8% | | 2% | / |
| | Abrasion resistance (H18 Grinding wheel) | | ≥6000 rpm | | Qualified | / |
| | UV adhesive force | | >4B | | Qualified | / |

As can be seen from TABLE 4, the PVC composite plate obtained in this example has a low heat warping and heat-shrinkage rate, indicating the plate material has a good shrinkage performance; moreover, the PVC composite plate has a low residual concavity and water absorption rate, a moderate density as well as good abrasion resistance.

The above description is merely for preferred embodiments of the present invention, and it is to be indicated that, for those of ordinary skill in the art, a variety of improvements and modifications may also be made without departing from the principle of the present invention, and such improvements and modifications should also be deemed to fall within the scope of the present invention.

**Claims**

1.  A PVC foaming material, which is made by melting and plasticizing of a stock, the stock comprising the following in parts by weight:

    | | |
    |---|---|
    | PVC | 600~900 parts; |
    | Light calcium carbonate | 600~900 parts; |
    | Sodium bicarbonate | 3~10 parts; |
    | AC foaming agent | 3~5 parts; |
    | Foaming control agent | 40~80 parts. |

2.  The foaming material according to claim 1, **characterized in that** the light calcium carbonate has a particle size of 1000~1500 mesh.

3.  The foaming material according to claim 1, **characterized in that** the AC foaming agent has a gas evolution of 150~200 mL/g.

4.  The foaming material according to claim 1, **characterized in that** the AC foaming agent has a decomposition temperature of 170~180°C.

5.  The foaming material according to claim 1, **characterized in that** the foaming control agent is one or more of K-400P, K-385, K-418, PA-40, PA-60, LP-21, LP-23, LP-40, LP-90 and LP-530.

6.  The foaming material according to claim 1, **characterized in that** the PVC has a viscosity number of 73~106 mL/g.

7.  The foaming material according to claim 1, **characterized in that** the stock further comprises one or more of a stabilizer, lubricant and impact modifier.

8.  A method of manufacturing a PVC foaming material, comprising the following steps:

    subjecting a stock to melting and plasticizing to obtain the PVC foaming material;
    the stock comprising 600~900 parts by weight of PVC, 600~900 parts by weight of light calcium carbonate, 3~10 parts by weight of sodium bicarbonate, 3~5 parts by weight of an AC foaming agent and 40~80 parts by weight of a foaming control agent.

9.  A PVC composite plate comprising a substrate and a semi-rigid PVC layer provided on a surface of the substrate, wherein
    the substrate is formed of a material which is the PVC foaming material according to any one of claims 1~7 or the PVC foaming material is made by the method according to claim 8;
    the semi-rigid PVC layer comprises PVC, filler and a plasticizer.

10. The composite plate according to claim 9, **characterized in that** the mass ratio of the PVC, filler and plasticizer in the semi-rigid PVC layer is 5~20:20~60:1~6.

# INTERNATIONAL SEARCH REPORT

| International application No. |
|---|
| **PCT/CN2015/081030** |

## A. CLASSIFICATION OF SUBJECT MATTER

C08L 27/06 (2006.01) i; B29C 44/00 (2006.01) i; C08K 3/26 (2006.01) i; B29C 47/00 (2006.01) i

According to International Patent Classification (IPC) or to both national classification and IPC

## B. FIELDS SEARCHED

Minimum documentation searched (classification system followed by classification symbols)

C08L 27; B29C 44; C08K 3; B29C 47

Documentation searched other than minimum documentation to the extent that such documents are included in the fields searched

Electronic data base consulted during the international search (name of data base and, where practicable, search terms used)

DWPI, EPODOC, CNKI, CNPAT: PVC, polyvinyl chloride, light calcium carbonate, AC foaming agent, foaming control agent, polyvinyl chloride expansion sheet, CaCO3, precipitated calcium carbonate, fine particle, light, sodium bicarbonate, foaming, vesicant, regulator

## C. DOCUMENTS CONSIDERED TO BE RELEVANT

| Category* | Citation of document, with indication, where appropriate, of the relevant passages | Relevant to claim No. |
|---|---|---|
| X | CN 103865208 A (ZHEJIANG TIANZHEN BAMBOO & WOOD DEVELOPMENT CO., LTD.), 18 June 2014 (18.06.2014), claims 1-9, and description, paragraphs [0041]-[0068] and [0084] | 1-10 |
| A | CN 103980636 A (GANSU YUHUI NEW MATERIAL CO., LTD.), 13 August 2014 (13.08.2014), the whole document | 1-10 |
| A | CN 102153826 A (LI, Bing), 17 August 2011 (17.08.2011), the whole document | 1-10 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 February 2016 (26.02.2016) | **10 March 2016 (10.03.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **CHEN, Xiujuan** Telephone No.: (86-10) **62085042** |
|---|---|

Form PCT/ISA/210 (second sheet) (July 2009)

## INTERNATIONAL SEARCH REPORT
### Information on patent family members

International application No.

**PCT/CN2015/081030**

| Patent Documents referred in the Report | Publication Date | Patent Family | Publication Date |
|---|---|---|---|
| CN 103865208 A | 18 June 2014 | CN 103865208 B | 26 August 2015 |
| | | CA 2910369 A1 | 24 September 2015 |
| | | AU 2015234011 A1 | 12 November 2015 |
| | | US 2015267025 A1 | 24 September 2015 |
| | | WO 2015139541 A1 | 24 September 2015 |
| | | CN 105061941 A | 18 November 2015 |
| | | CN 105064658 A | 18 November 2015 |
| CN 103980636 A | 13 August 2014 | None | |
| CN 102153826 A | 17 August 2011 | CN 102153826 B | 26 September 2012 |

Form PCT/ISA/210 (patent family annex) (July 2009)